# EUROPÄISCHE PATENTANMELDUNG

(11) **EP 2 416 295 A1**
(43) Veröffentlichungstag der Anmeldung: **08.02.2012**
(21) Anmeldenummer: 11176192.0
(22) Anmeldetag: 01.08.2011
(51) Int. Cl.: G06T 11/00, G06F 3/048

(54) **Verfahren zur Darstellung von Graphiken für Mediendateien**

(30) Priorität: 03.08.2010 DE 102010033174; 22.09.2010 DE 102010045963
(71) Anmelder: Deutsche Telekom AG, 53113 Bonn (DE)
(72) Erfinder: Die Erfindernennung liegt noch nicht vor
(74) Vertreter: Schrooten, Rolf

(57) **Zusammenfassung**

Die Erfindung betrifft ein Verfahren zur automatischen Erzeugung einer auf einer Anzeigevorrichtung (1) darstellbaren Graphik für eine Mediendatei, in der ein Audio- und/oder Video- und/oder Text- und/oder Spiel-Medium gespeichert ist, wobei mit der Mediendatei eine erste Graphik (2) in Form einer Frontseiten-Abbildung verknüpft ist, und wobei zu der Mediendatei eine zweite Graphik (4) in Form einer Stirnseiten-Abbildung erzeugt wird, die mit der Mediendatei verknüpft wird und auf der Anzeigevorrichtung (1) darstellbar ist.

## Beschreibung

Die vorliegende Erfindung betrifft ein Verfahren nach dem Oberbegriff von Anspruch 1. Bei diesem Verfahren geht es um die automatische Erzeugung von Graphiken für mindestens eine Mediendatei, die auf einer Anzeigevorrichtung, etwa auf einem Computer-Monitor oder einem mobilen Endgerät dargestellt werden können.

Eine Mediendatei ist dabei eine Datei, in der ein in digitaler Form vorliegendes Werk, welches Audiodaten und/oder Videodaten und/oder Textdaten und/oder Spieldaten enthalten kann, elektronisch gespeichert ist. Derartige digitale Medien können also insbesondere Filme, Musikstücke, Computerspiele oder elektronisch vorliegende Druckmedien, etwa sogenannte e-books oder dergleichen sein, die in einer Mediendatei gespeichert sind, was oft in komprimierter Form erfolgt. Inhalte und Werke, die aus mehreren digitalen Medien bestehen, werden allgemein auch mit dem Begriff "Multimedia" bezeichnet. Die Mediendateien können auf separaten Datenträgern, etwa CDs, DVDs oder elektronischen Speichern abgespeichert werden und über Netzwerke, insbesondere über das Internet, und/oder über drahtlose Übertragungsstrecken übertragen werden.

Um eine Mediendatei symbolisch auf einer Anzeigevorrichtung darstellen zu können, ist es bekannt, mit der Mediendatei eine Graphik zu verknüpfen, die in Form einer rechteckigen Frontseiten-Abbildung angezeigt werden kann. Die Frontseiten-Abbildung kann einer zugehörigen Verpackungseinheit entsprechen, also beispielsweise dem Cover einer CD oder DVD mit Musikwerken oder Filmen oder der Titelseite eines Buches. Anhand dieser auf der Anzeigevorrichtung dargestellten Frontseiten-Abbildung kann der Inhalt der zugeordneten Mediendatei von Nutzern schnell erfasst und einzelne Mediendateien können leicht identifiziert werden. Die Anzeige der Frontseiten-Abbildungen kann sowohl bei der Verwaltung eigener Mediendateien eines Nutzers als auch für die Präsentation von zu erwerbenden Mediendateien auf entsprechenden Plattformen eingesetzt werden.

Die Anzeigevorrichtung kann Bestandteil eines lokalen Rechnersystems sein, auf dem die Mediendateien mittels einer als Software ausgeführten Wiedergabeeinheit wiedergegeben werden können. Alternativ kann die Anzeigevorrichtung auch zu einer als eigenständiges Gerät ausgeführten Wiedergabeeinheit, etwa einem e-book-Lesegerät gehören.

Von Nachteil bei der Anzeige der Frontseiten-Abbildungen ist es, dass diese eine relativ große Fläche beanspruchen und entsprechend große Bereiche der Anzeigevorrichtung belegen. Das führt insbesondere bei kleineren Anzeigevorrichtungen dazu, dass ohne Einschränkung der Erkennbarkeit nur eine beschränkte Anzahl von Frontseiten-Abbildungen dargestellt werden kann. Außerdem erlauben derartige Frontseiten-Abbildungen nur eine wenig realistische Darstellung von mehreren nebeneinander liegenden Graphiken zu mehreren Mediendateien.

Aus der US 2008/0216009 A1 ist ein System und ein Verfahren zum Abspeichern und einfacheren Wiederauffinden einer großen Anzahl von Dateien auf einem Computersystem bekannt. Dazu werden die einzelnen Dateien jeweils mit einem virtuellen Buch verknüpft, welches der Benutzer in einer virtuellen Bibliothek in ein virtuelles Buchregal abstellen kann. Dabei können die digitalen Buchobjekte derart nebeneinander stehend in Buchregalen angezeigt werden, dass man von den meisten Buchobjekten nur die Buchrücken sieht. Die hier sichtbaren Buchrücken müssen allerdings vom Benutzer mittels einer sogenannten Dialogbox manuell erzeugt werden, wobei der Benutzer Parameter wie Höhe, Breite, Dicke, Farbe, Textur und/oder Titel für jedes Buchobjekt selber festlegen muss.

Aus der US 7 266 768 B2 sind "Multiple-page icons" sowie ein System bzw. Verfahren für eine Dokumenten-Organisation mittels derartiger Icons bekannt. Der Begriff Icon wird dabei für jede Art von auf einem Computer-Display anzeigbaren Symbolen, Darstellungen oder Abbildungen verstanden. Ein solches Icon kann eine Abbildung mit einer Frontfläche und mindestens einer Seitenfläche umfassen. Auch kann eine Reihe von mehreren nebeneinander stehenden derartigen Icons dargestellt werden.

Aufgabe der vorliegenden Erfindung ist es, ein Verfahren der eingangs genannten Art zu schaffen, das eine automatische Generierung von Graphiken ermöglicht, die eine platzsparendere und realistische Anzeige von jeweils einzelne Mediendateien repräsentierenden Graphiken erlaubt.

Diese Aufgabe wird erfindungsgemäß durch ein Verfahren nach Anspruch 1 gelöst. Vorteilhafterweise Ausgestaltungen und Weiterbildungen der Erfindung ergeben sich aus den abhängigen Ansprüchen.

Wesentlich bei der erfindungsgemäßen Lösung ist es, dass zu der mit einer ersten Graphik vorliegenden Mediendatei automatisch eine zweite Graphik in Form einer Stirnseiten-Abbildung erzeugt und mit der Mediendatei verknüpft wird. Diese zweite Graphik kann nach ihrer Erzeugung zusätzlich zu der ersten Graphik oder statt der ersten Graphik auf der Anzeigevorrichtung dargestellt werden.

Ein wesentlicher Grundgedanke der Erfindung liegt also darin, dass zu der relativ breiten rechteckigen Frontseiten-Abbildung automatisch eine daran angepasste, schmalere und ebenfalls rechteckige Stirnseiten-Abbildung generiert wird. Vorteilhafterweise kann dabei auch die Stirnseiten-Abbildung zur Identifizierung der zugeordneten Mediendatei dienen.

Ein wesentlicher Vorteil liegt dabei darin, dass der Benutzer bei der eigentlichen Generierung des Grunddesigns der zweiten Graphik nicht selber mitwirken muss. Ihm kann optional allerdings die Möglichkeit eingeräumt werden, auf Wunsch bestimmte Modifikationen oder Ergänzungen an der automatisch erzeugten zweiten Graphik vornehmen zu können.

Ein weiterer wesentlicher Vorteil liegt darin, dass die schmaleren Stirnseiten-Abbildungen weniger Anzeigefläche beanspruchen. Deshalb kann eine größere Anzahl von Graphiken für jeweils eine damit verbundene Mediendatei dargestellt werden.

Außerdem ist durch die Darstellung einer Seitenansicht der die einzelnen Mediendateien repräsentierenden Verpackungseinheiten eine realistischere Darstellung möglich, was einen weiteren Vorteil darstellt.

Besonders vorteilhaft ist es dabei, wenn die Höhe der zweiten Graphik in einer vorgegebenen Abhängigkeit von der Höhe der ersten Graphik bestimmt wird. Insbesondere wird vorgeschlagen, dass die Höhe der zweiten Graphik proportional zu der Höhe der ersten Graphik ist. Dabei ist der Proportionalitätsfaktor vorzugsweise gleich 1, so dass die Höhe der beiden rechteckigen Graphiken gleich groß ist.

Besonders vorteilhaft ist es ferner, wenn die Breite der zweiten Graphik in einer vordefinierten Abhängigkeit von der Größe der Mediendatei und/oder von mindestens einem mit der Mediendatei verknüpften Parameter festgelegt wird. Vorzugsweise ist die Breite der zweiten Graphik dabei proportional zu der Größe der Mediendatei oder zu einem mit der Mediendatei verknüpften Parameter. Im Falle eines e-books als Mediendatei kann der Parameter, von dem die Breite der zweiten Graphik abhängt, vorzugsweise die Anzahl der digitalen Seiten des e-books sein.

Nach einer besonders bevorzugten Ausführungsform der Erfindung ist die Mediendatei ein e-book, das Textdaten in digital gespeicherter Form enthält, wobei die zweite Graphik eine Darstellung des zugehörigen Buchrückens ist.

Eine besonders realistische Darstellung kann dadurch erreicht werden, dass zu mehreren Mediendateien jeweils eine zweite Graphik erzeugt wird, wobei die so erzeugten Graphiken nebeneinander, insbesondere aneinander angrenzend, angezeigt werden. Auf diese Weise kann ein Regal dargestellt werden, in dem auf einem oder mehreren Regalbrettern verschiedene Objekte stehen, die jeweils einer damit verknüpften Mediendatei entsprechen. Insbesondere bei e-books kann hierdurch der Eindruck eines herkömmlichen Bücherregals vermittelt werden, bei dem man die einzelnen Buchrücken der darin eingestellten Bücher sieht. Vorteilhafterweise können dabei auch Buchstützen zur Unterteilung in verschiedene Bereiche eines Regals eingesetzt werden. Ferner können einzelne oder mehrere Buchrücken schräg geneigt dargestellt werden.

Besonders vorteilhaft ist es, wenn mindestens eine Mediendatei von einem Benutzer durch Aktivieren der dazu angezeigten zweiten Graphik für eine mit der Mediendatei ausführbare Aktion, insbesondere zum Abspielen oder Anzeigen auf einer Wiedergabeeinheit, ausgewählt werden kann. Die Aktivierung kann beispielsweise durch Antippen der auf einem Touchscreen dargestellten zweiten Graphik erfolgen.

Gemäß einer bevorzugten Ausführungsform der Erfindung wird aus den Farben der ersten Graphik ein mittlerer Farbwert ermittelt, mit dem die zweite Graphik zumindest teilweise gefüllt wird. Der so eingefärbte Bereich der zweiten Graphik entspricht also einem gemittelten Farbwert der ersten Graphik.

Alternativ hierzu oder ergänzend kann auch vorgesehen sein, dass aus den Farben der ersten Graphik ein mittlerer Farbwert ermittelt wird, wobei die zweite Graphik dann jedoch zumindest teilweise mit einem Ersatzfarbwert gefüllt wird, der aus einer vorgegebenen Menge von Farbwerten dem mittleren Farbwert am nächsten liegt. Der gemittelte Farbwert der ersten Graphik wird dabei gleichsam auf einen nächstpassenden Ersatzfarbwert gerundet, wodurch beispielsweise das Erscheinungsbild der Stirnseiten-Abbildungen einer Corporate Identity angepasst werden kann.

Gemäß einer weiteren bevorzugten Ausführungsform der Erfindung wird aus der ersten Graphik ein insbesondere streifenförmiger Bereich ausgeschnitten, der dann in die zweite Graphik eingefügt wird. Dieser streifenförmige Ausschnitt der ersten Graphik ist vorzugsweise vertikal ausgerichtet. Grundsätzlich kann er aber beliebig orientiert sein.

Besonders vorteilhaft ist es, wenn aus der ersten Graphik ein dünner vertikal verlaufender Streifen ausgeschnitten wird, der schmaler ist, als die Breite der zweiten Graphik, und dass dieser ausgeschnittene Streifen anschließend in der Breite so weit ausgedehnt bzw. gestreckt wird, bis er die Breite der zweiten Graphik erreicht. Vorzugsweise wird dabei der Streifen aus einem Bereich der ersten Graphik ausgeschnitten, der keinen Text enthält.

Gemäß noch einer weiteren bevorzugten Ausführungsform der Erfindung wird die erste Graphik in ihrer Breite auf einen schmaleren Streifen komprimiert, der in die zweite Graphik eingefügt wird. Dabei ist die zweite Graphik also eine verzerrte bzw. zusammengedrückte Darstellung der Frontseite. Zusätzlich können vorteilhafterweise noch an sich bekannte Zeicheneffekte, beispielsweise ein gaussches Weichzeichnen angewendet werden.

Vorteilhafterweise kann die zweite Graphik mindestens einen Querstreifen enthalten, der in einer Kontrastfarbe zu den angrenzenden Bereichen der zweiten Graphik ausgeführt ist. Auch diese Kontrastfarbe kann vorzugsweise aus einer vorgegebenen Menge von Kontrastfarben ausgewählt sein.

Weiterhin wird vorgeschlagen, dass die zweite Graphik Textelemente aufweist, die insbesondere Informationen zum Titel und/oder Autor und/oder Genre und/oder Verlag der Mediendatei enthalten.

Ferner kann die zweite Graphik vorteilhafterweise Schmuckelemente enthalten, die insbesondere Linien und/oder Punkte und/oder Symbole umfassen können.

Gemäß einer besonders bevorzugten Ausführungsform der Erfindung ist dabei vorgesehen, dass die Farbe des Querstreifens und/oder Textelemente und/oder Schmuckelemente von einem Nutzer frei definiert oder aus einer vorgegebenen Menge von Farben bzw. Textelementen oder Schmuckelementen ausgewählt werden können. Anschließend kann der Nutzer die so gewählten Attribute zu der Mediendatei abspeichern, um hierdurch einzelne Mediendateien noch einfacher und schneller wiedererkennen zu können.

Um eine besonders realistische, dreidimensionale Darstellung zu erreichen, ist es besonders vorteilhaft, wenn die zweite Graphik einen Helligkeitsverlauf und/oder Farbverlauf aufweist, der zu mindestens einem Rand hin orientiert ist. Auch können die Ecken der zweiten Graphik leicht abgerundet werden.

Die vorliegende Erfindung betrifft auch eine Mediendatei mit darin gespeicherten Audio- und/oder Video- und/oder Text- und/oder Spiel-Daten, wobei mit der Mediendatei eine erste Graphik in Form einer Frontseiten-Abbildung sowie eine zweite Graphik in Form einer Stirnseiten-Abbildung verknüpft ist, die gemäß des Verfahrens der vorangehend beschriebenen Art erzeugt ist.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: eine Anzeigevorrichtung, auf der Mediendateien durch mit ihnen verknüpfte erste Graphiken dargestellt sind; und
- Figur 2:: eine Anzeigevorrichtung, auf der Mediendateien durch mit ihnen verknüpfte zweite Graphiken dargestellt sind.

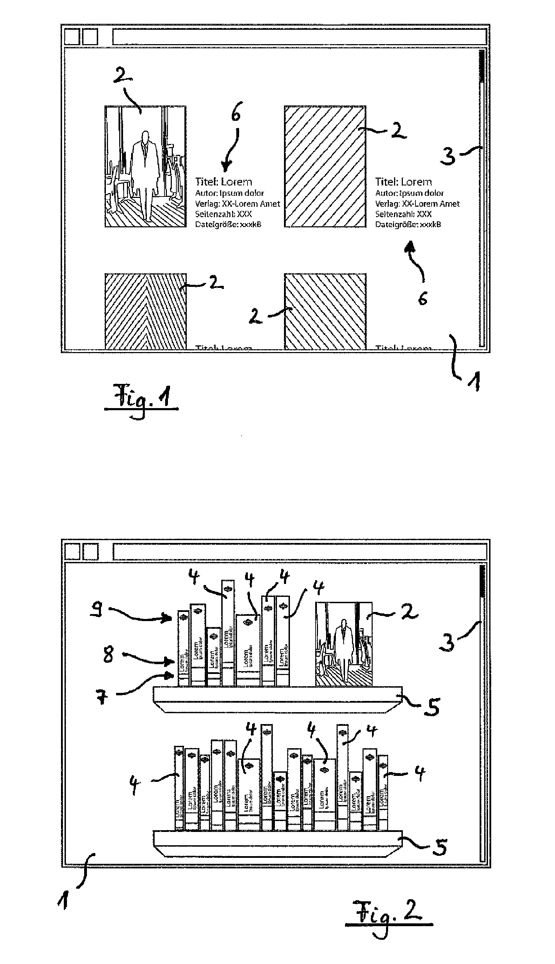

Figur 1 zeigt als Anzeigevorrichtung den Bildschirm 1 eines nicht näher dargestellten mobilen e-book-Lesegerätes, auf dem eine Anzahl von Mediendateien in der Form von e-books gespeichert sind. Mit jedem e-book ist in an sich bekannter Weise eine erste Graphik 2 verknüpft, welche die Frontseitenabbildung des Buchdeckels des elektronisch vorliegenden Buches in digitaler Form wiedergibt.

Da die Fläche jeder Graphik 2 einen relativ großen Anteil der Fläche des Bildschirms 1 einnimmt, können nur relativ wenige Graphiken 2 gleichzeitig angezeigt werden. Weitere Graphiken 2, die bei der in Figur 1 dargestellten Abbildung noch nicht oder noch nicht vollständig zu sehen sind, können nur durch Verschieben des aktuellen Bildschirminhaltes sichtbar gemacht werden, was in herkömmlicher Weise durch Scrollen entsprechend des hier vertikal verlaufenden Scrollbalkens 3 erfolgt.

Bei dem in Figur 2 dargestellten Bildschirm 1 kann demgegenüber eine wesentlich größere Anzahl von zweiten Graphiken 4 gleichzeitig dargestellt werden, die ebenfalls jeweils mit einem e-book verknüpft sind. Diese zweiten Graphiken 4 entsprechen der Abbildung der einzelnen Buchrücken der jeweiligen elektronisch gespeicherten e-books.

Während bei dem in Figur 1 dargestellten Beispiel nur zwei bis maximal vier Graphiken 2 gleichzeitig angezeigt werden können, sind bei dem in Figur 2 dargestellten Beispiel zweiundzwanzig Graphiken 4 gleichzeitig zu sehen. Zusätzlich ist in Figur 2 auch ein e-book durch eine erste Graphik 2 dargestellt, wobei dieses Buch beispielsweise zuletzt benutzt worden sein kann.

Die einzelnen Graphiken 4 sind in der Form von nebeneinander in Bücherregalen 5 stehenden Büchern angezeigt, was eine besonders realistische Darstellung ermöglicht. Durch Scrollen können hier weitere Regale 5 mit jeweils mehreren Büchern angezeigt werden, wodurch sich die Anzahl der anzeigbaren zweiten Graphiken 4 zu den hier vorhandenen e-books entsprechend vergrößert. Auch können einzelne oder mehrere der zweiten Graphiken 4 als schräg stehende Bücher dargestellt werden.

Die Höhen der dargestellten Buchrücken 4 entspricht dabei der Höhe der jeweils zugehörigen Frontseiten, während die Breite der einzelnen Buchrücken mit der Seitenanzahl des jeweiligen e-books verknüpft ist und somit als Buchdicke einen Rückschluss auf den Umfang der jeweiligen Mediendatei zulässt. Eine entsprechende Information kann bei der Darstellung aus Figur 1 nur über zusätzlich in Textform angezeigte Daten 6 erhalten werden.

In Figur 2 werden zusätzliche Informationen durch die Gestaltung der einzelnen Buchrücken angezeigt. Dazu wird in jeder zweiten Graphik 4 ein farblich abgesetzter Querstreifen 7, der Buchtitel als Textinformation 8 und ein Symbol 9 angezeigt. Diese Elemente 7, 8 und 9 können entweder vom Benutzer frei gewählt und jeweils zu der zugehörigen Mediendatei des betreffenden e-books gespeichert werden, oder auch von einem Verlag oder Serviceprovider vorgegeben sein.

Als Anzeigevorrichtung 1 kommen auch weitere Systeme, beispielsweise ein Monitor eines lokalen Rechnersystems in Betracht. Dabei kann eine Auswahl von e-books oder anderen Mediendateien angezeigt werden, die bei einem Anbieter verfügbar sind und die insbesondere über das Internet erworben werden können.

## Patentansprüche

1. Verfahren zur Erzeugung einer auf einer Anzeigevorrichtung (1) darstellbaren Graphik für eine Mediendatei, in der ein Audio- und/oder Video- und/oder Text- und/oder Spiel-Medium gespeichert ist, wobei mit der Mediendatei eine erste Graphik (2) in Form einer Frontseiten-Abbildung verknüpft ist,
**dadurch gekennzeichnet,**
**dass** zu der Mediendatei eine zweite Graphik (4) in Form einer Stirnseiten-Abbildung erzeugt wird, die mit der Mediendatei verknüpft wird und auf der Anzeigevorrichtung (1) darstellbar ist.

2. Verfahren nach Anspruch 1, **dadurch gekennzeichnet, dass** die Höhe der zweiten Graphik (4) von der Höhe der ersten Graphik (2) abhängt, insbesondere proportional zu der Höhe der ersten Graphik (2) ist, wobei der Proportionalitätsfaktor vorzugsweise gleich 1 ist.

3. Verfahren nach Anspruch 1 oder 2, **dadurch gekennzeichnet , dass** die Breite der zweiten Graphik (4) von der Größe der Mediendatei und/oder von mindestens einem mit der Mediendatei verknüpften Parameter abhängt, wobei die Breite der zweiten Graphik (4) vorzugsweise proportional zu der Größe der Mediendatei oder zu einem mit der Mediendatei verknüpften Parameter ist.

4. Verfahren nach einem der Ansprüche 1 bis 3, **dadurch gekennzeichnet , dass** die Mediendatei ein e-book ist, wobei die zweite Graphik (4) eine Darstellung des zugehörigen Buchrückens ist.

5. Verfahren nach einem der vorherigen Ansprüche, **dadurch gekennzeichnet, dass** zu mehreren Mediendateien jeweils eine zweite Graphik (4) erzeugt wird, wobei die so erzeugten Graphiken (4) nebeneinander, insbesondere aneinander angrenzend, anzeigbar sind.

6. Verfahren nach Anspruch 5, **dadurch gekennzeichnet, dass** eine Mediendatei von einem Benutzer durch Aktivieren der dazu angezeigten zweiten Graphik (4) für eine mit der Mediendatei ausführbare Aktion, insbesondere für eine Wiedergabeaktion, auswählbar ist.

7. Verfahren nach einem der vorherigen Ansprüche, **dadurch gekennzeichnet, dass** aus den Farben der ersten Graphik (2) ein mittlerer Farbwert ermittelt wird, und dass die zweite Graphik (4) zumindest teilweise entweder mit diesem mittleren Farbwert oder mit einem Ersatzfarbwert, welcher aus einer vorgegebenen Menge von Farbwerten dem mittleren Farbwert am nächsten liegt, gefüllt wird.

8. Verfahren nach einem der vorherigen Ansprüche, **dadurch gekennzeichnet, dass** aus der ersten Graphik (2) ein insbesondere streifenförmiger Bereich ausgeschnitten wird, und dass die zweite Graphik (4) den ausgeschnittenen Bereich enthält.

9. Verfahren nach einem der vorherigen Ansprüche, **dadurch gekennzeichnet, dass** aus der ersten Graphik (2) ein vertikal verlaufender streifenförmiger Bereich ausgeschnitten wird, dessen Breite kleiner ist als die Breite der zweiten Graphik, und dass dieser ausgeschnittene Bereich anschließend bis zur Breite der zweiten Graphik gestreckt wird.

10. Verfahren nach einem der vorherigen Ansprüche, **dadurch gekennzeichnet, dass** die erste Graphik (2) in ihrer Breite auf einen schmaleren Streifen komprimiert wird, und dass die zweite Graphik (4) den so erzeugten Streifen enthält.

11. Verfahren nach einem der vorherigen Ansprüche, **dadurch gekennzeichnet, dass** die zweite Graphik (4) mindestens einen Querstreifen (7), enthält, der in einer Kontrastfarbe zu den angrenzenden Bereichen der zweiten Graphik (4) ausgeführt ist.

12. Verfahren nach einem der vorherigen Ansprüche, **dadurch gekennzeichnet, dass** die zweite Graphik (4) Textelemente (8), die insbesondere Informationen zum Titel und/oder Autor und/oder Genre und/oder Verlag der Mediendatei umfassen, und/oder Schmuckelemente (9), die insbesondere Linien und/oder Punkte und/oder Symbole umfassen, enthält.

13. Verfahren nach Anspruch 11 oder 12, **dadurch gekennzeichnet, dass** die Farbe des Querstreifens (7) und/oder Textelemente (8) und/oder Schmuckelemente (9) von einem Nutzer frei definiert oder aus einer vorgegebenen Menge ausgewählt werden können und zu der Mediendatei abspeicherbar sind.

14. Verfahren nach einem der vorherigen Ansprüche, **dadurch gekennzeichnet, dass** die zweite Graphik (4) einen zu mindestens einem Rand hin orientierten Helligkeitsverlauf und/oder Farbverlauf aufweist.

15. Mediendatei, in der ein Audio- und/oder Video- und/oder Text- und/oder Spiel-Medium gespeichert ist, wobei mit der Mediendatei eine erste Graphik (2) in Form einer Frontseiten-Abbildung verknüpft ist,
**dadurch gekennzeichnet,**
**dass** mit der Mediendatei eine zweite Graphik (4) in Form einer Stirnseiten-Abbildung verknüpft ist, die gemäß des Verfahrens nach einem der vorherigen Ansprüche erzeugt ist.
